# EUROPEAN PATENT APPLICATION

(11) **EP 1 726 797 A1**
(43) Date of publication of application: **29.11.2006**
(21) Application number: 05291690.5
(22) Date of filing: 08.08.2005
(51) Int. Cl.: F01N 3/022, F01N 7/18

(54) **Honeycomb structured body**

(30) Priority: 27.05.2005 WO PCT/JP2005/009806
(71) Applicant: IBIDEN CO., LTD., Ogaki-shi, Gifu 503-8604 (JP)
(72) Inventor: Yamada, Keiji, c/o Ibiden Co., Ltd.,, Ibi-gun, Gifu, 5010695 (JP)
(74) Representative: Hart Davis, Jason

(57) **Abstract**

An object of the present invention is to provide, for example, a honeycomb structured body (10) which is inserted, for use, into a pipe forming an exhaust passage of an internal combustion engine, and provided with a lot of information which makes it possible to clearly distinguish an exhaust gas flow-in side and an exhaust gas flow-out side. The present invention is directed to a pillar-shaped honeycomb structured body (15) each including a number of through holes (11) that are placed in parallel with one another in the length direction with a wall portion interposed therebetween, wherein information regarding the honeycomb structured body (10) is displayed on a circumferential surface and/or an end face thereof by using a two-dimensional code (16).

## Description

### TECHNICAL FIELD

The present invention relates to a honeycomb structured body that is used as a filter and the like for purifying exhaust gases discharged from an internal combustion engine such as a diesel engine or the like.

### BACKGROUND ART

There have been proposed various honeycomb filters for purifying exhaust gases and catalyst supporting members, which are used for purifying exhaust gases discharged from internal combustion engines of vehicles such as buses, trucks and the like, and construction machines.

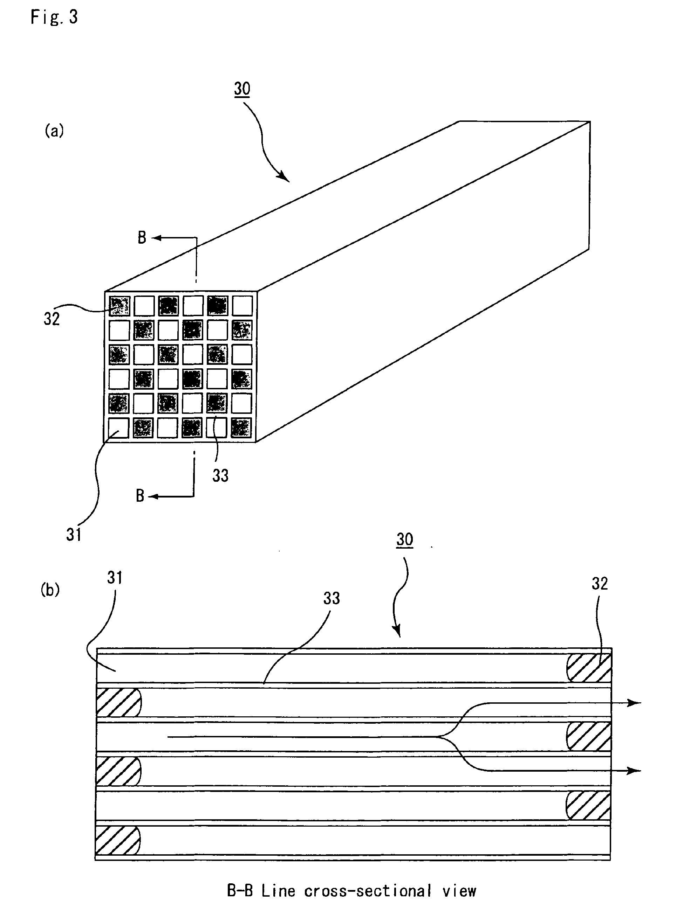

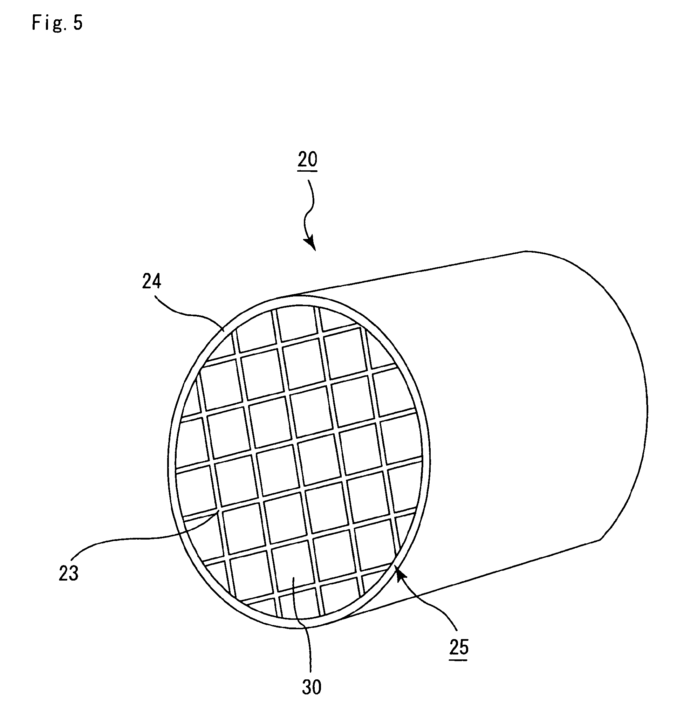

Specifically, for example, a honeycomb filter for purifying exhaust gases as shown in Fig. 5 has been proposed. In the honeycomb filter for purifying exhaust gases shown in Fig. 5, apluralityof honeycomb members 30 made of silicon carbide and the like are combined with one another through a sealing material layers 23 to form a honeycomb block 25, and a sealing material layer 24 is formed on the circumference of the honeycomb block 25. Moreover, as shown in Fig. 3, the honeycomb member 30 has a structure in which a large number of through holes 31 are placed in parallel with one another in the length direction and a partition wall 33 that separate the through holes 31 from one another functions as a filter.

That is to say, as shown in Fig. 3 (b), each of the through holes 31 formed in the porous honeycomb member 30 is sealed with a plug 32 at either of ends of its exhaust gas inlet side or exhaust gas outlet side so that exhaust gases that have entered one through hole 31 are discharged from another through hole 31 after having always passed through the partition wall 33 that separates the through holes 31 from one another.

Moreover, with respect to the honeycomb structured body of this type, there has been also proposed a catalyst supporting member in which a catalyst is supported inside the through holes, with the ends of the through holes being not sealed.

Here, the honeycomb filter for purifying exhaust gases and the honeycomb structured body to be used as the catalyst supporting member are manufactured, for example, through the following method.

In other words, first, a mixed composition containing a solvent, a binder and the like in addition to ceramic particles that are a raw material is prepared, and an extrusion-molding process or the like is carried out by using this mixed composition to manufacture a pillar-shaped formed body including a large number of through holes that are placed in parallel with one another in the length direction with a partition wall interposed therebetween, and this formed body is cut into a predetermined length.

Next, the resulting formed body is dried and moisture is evaporated, so that a dried formed body having predetermined strength that is easily handled is formed and both of the ends of the dried body are subjected to a cutting process using a cutter so that a ceramic formed body having a uniform length is manufactured.

Then, the ends of this ceramic formed body is sealed with a plug mainly composed of the above-mentioned ceramic particles so as to form a staggered pattern, and this is then subjected to degreasing and sintering processes, so that a honeycomb member 30 is manufactured (see Fig. 3).

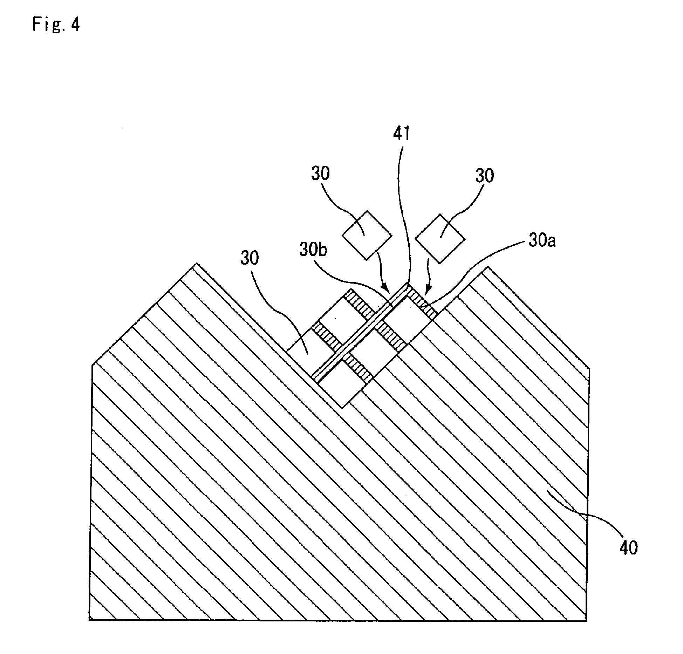

Moreover, a protective film is stuck to each of the two end faces of the honeycomb member 30 and, as shown in Fig. 4, a plurality of the honeycomb members 30 are laminated through a sealing material paste that forms adhesive layers 23, so that a honeycomb laminated body is assembled, and after having been dried, this is cut into a predetermined shape to prepare a honeycomb block 25. Then, a sealing material paste is applied to the circumference of this honeycomb block 25 to form a sealing material layer 24, and by separating the protective film, a honeycomb structured body 20 serving as a honeycomb filter for purifying exhaust gases is formed (see Fig. 5).

Here, when the stacking process and the like of the honeycomb members 30 are performed without carrying out the sealing process, the resulting product is utilized as a catalyst supporting member.

In the case where the honeycomb filter for purifying exhaust gases and the catalyst supportingmember are manufactured through such a method, however, protruded portions and recessed portions (irregularities) of the honeycomb member tend to appear on each of the end faces of the honeycomb filter for purifying exhaust gases or the like, due to shrinkage errors of the honeycomb members in the manufacturing processes, positional deviations that occur upon stacking the honeycomb laminated members, warps that occur in the honeycomb members and the like.

Furthermore, in general, a honeycomb filter for purifying exhaust gases is inserted, for use, into a pipe that forms an exhaust passage in an internal combustion engine and, as described above, in the case where irregularities are formed on the end faces of the honeycomb filter for purifying exhaust gases, upon insertion into the pipe, the honeycomb filter for purifying exhaust gases tends to be inserted diagonally to cause problems after a long-term use. Moreover, in the case where the pipe has a taper-shaped narrowed portion, the end of the honeycomb filter for purifying exhaust gases tends to collide with this potion to cause damages.

In order to solve such problems, there has been disclosed a honeycomb filter for purifying exhaust gases in which its two end faces are subjected to flattening processes (for example, see Patent Document 1). Such flattening processes to be applied to the two ends of a honeycomb filter for purifying exhaust gases are effective so as to solve the above-mentioned problems; however, these processes are disadvantageous from the economic viewpoint.

Moreover, in the case where the honeycomb filter for purifying exhaust gases is used as a filter for collecting particulates, in this filter, it is necessary to prepare the followings: through holes each of which has an opened end face on the exhaust gas flow-in side with a closed end face on the opposite side and is used for collecting particulates(hereinafter, also referred to as gas flow-in cells); and through holes each of which has a closed end face on the exhaust gas flow-in side with an opened end face on the opposite side and does not basically collect particulates(hereinafter, also referred to as gas flow-out cells). Here, a catalyst used for converting NOx gas and the like and a NOx gas absorbing metal are placed in the respective through holes, if necessary.

In the honeycomb filter for purifying exhaust gases of this type, it is desirable that particulates are effectively burnt in the gas flow-in cells, while NOx gas and the like are efficiently converted in the gas flow-out cells.

Further, there has been proposed a honeycomb filter for purifying exhaust gases in which through holes are formed so that the surface area of the wall faces of the gas flow-in cells is made greater than the surface area of the wall faces of the gas flow-out cells (for example, see Patent Document 3). In the honeycomb filter for purifying exhaust gases of this type, it becomes possible to accumulate a large amount of ashes in the gas flow-in cells, and consequently to suppress an increase in the pressure loss.

Moreover, there have been proposed a catalyst supporting member in which a catalyst used for convertingNOx gas is supported onlyon the gas flow-out cells anda honeycomb filter for purifying (converting) exhaust gases which has a concentration gradient of the NOx gas absorbing metal wherein the concentration increases from the gas flow-in side toward the gas flow-out side (for example, see Patent Document 3 and Patent Document 4).

In the case of these honeycomb filters for purifying exhaust gases in which the shapes of the gas flow-in cells and gas flow-out cells are made uneven from each other and catalyst supporting members in which the amounts of catalyst and the like applied to the inside of the cells are made different from each other, although a superior purifying (converting) function for exhaust gases is obtained, it is difficult to distinguish the gas flow-in side and the gas flow-out side upon manufacturing, sometimes resulting in a failure in setting the amounts of catalyst and the like to be applied.

Moreover, upon stacking the honeycomb members, a failure tends to occur in setting the orientation of the honeycomb members; thus, a honeycomb filter for purifying exhaust gases which has the honeycomb member stacked in an erroneous direction causes an abnormal back pressure to the internal combustion engine at the time of use, resulting in a serious trouble in the system.

Furthermore, there have been disclosed catalytic converters in which a conventional converter, which does not have a divided structure, but has an integral structure, and has through holes having no sealed ends, is provided with information regarding the dimension, weight and the like of the catalyst that is attached to the circumferential face (for example, see Patent Documents 5 to 10); however, in these catalytic converters, no fact of using a two-dimensional code such as a QR code or no information with respect to the end faces have been given.

Moreover, in the catalytic converters of this type, there has been proposed a thin-wall filter having an improved temperature raising property. Here, when the thickness of the a partition wall is made thinner, the partition wall become more likelyto suffer wind erosion at the time of gas flow-in; therefore, in order to improve the erosion resistant property, there have been proposed techniques for improving the strength of the end portion.

For example, there has been proposed a method for improving the wear resistant property of the opening end faces by making the partition wall of the end portion thicker (for example, see Patent Document 11). Further, there has been proposed a method in which cordierite powder is adhered to the end portion (for example, see Patent Document 12). There has been also proposed another structure in which the adhering property of a catalyst is improved at one end portion of the opening or in which a reinforced portion is formed at the partition wall in order to improve the erosion resistance (for example, see Patent Document 13). Moreover, there has been proposed still another structure in which the pore diameter of the end portion is adjusted so as to improve the erosion resistance (for example, see Patent Document 14). Furthermore, there has been proposed yet another method inwhichby forming a glass phase in apredeterminedportion of the partition wall in the vicinity of the end portion or the like of the opening, the erosion resistance is improved (for example, see Patent Document 15).

Further, there have been proposed various methods in which various properties are applied to the end portion in a catalytic converter and the like, such as a method for allowing slurry to adhere to the opening end portion, a method for strengthening the opening endportion and a method in which the pore distribution is changed in the opening end portion.

Moreover, in some cases, different catalyst supporting methods are used between the gas flow-in side and the gas flow-out side, and in such cases, it is necessary to distinguish the gas flow-in side and the gas flow-out side.

Furthermore, conventionally, there has been a technology for displaying information on a honeycomb structured body which comprises using a bar code and the like (see Patent Document 16). However, only a small amount of information was able to be displayed with a bar code and the like. Moreover, when a bar code is displayed on rounded surfaces such as a honeycomb filter, reading error easily occurred.

Patent Document 1: JP-A 2002-224516
Patent Document 2: JP-A 03-49608 (1991)
Patent Document 3: JP-A 2002-349238
Patent Document 4: JP-A 07-132226 (1995)
Patent Document 5: International Publication WO 02/40215
Patent Document 6: International Publication WO 02/40216
Patent Document 7: International Publication WO 02/40157
Patent Document 8: JP-A 2002-210373
Patent Document 9: JP-A 2002-221032
Patent Document 10: JP-A 2002-266636
Patent Document 11: JP-A 2000-51710
Patent Document 12: JP-A 2002-121085
Patent Document 13: JP-A 2003-103181
Patent Document 14: JP-A 2003-95768
Patent Document 15: JP-A 2003-26488
Patent Document 16: International Publication WO 04/106702

### DISCLOSURE OF THE INVENTION

### PROBLEMS TO BE SOLVED BY THE INVENTION

As described above, when information was provided to a catalyst converter and the like, reading error has occurred in some cases if the amount of information was large. Moreover, in the case where the portion provided with information was a rounded surface, reading error also occurred in some cases.

Furthermore, in recent years, with respect to catalytic converters also, it becomes necessary to clearly distinguish the gas flow-in side and the gas flow-out side, and when the end portion is misplaced, the catalytic converter fails to exert predetermined functions, resulting in a trouble in an apparatus to which the catalytic converter is attached, depending on cases.

### MEANS FOR SOLVING THE PROBLEMS

The present invention has been devised so as to solve the above-mentioned problems, and its object is to provide a honeycomb structured body on which information is displayed which can be read out unmistakably when a large amount of information is displayed or information is displayed on a rounded surface.

Furthermore, the present invention also has its object to provide a honeycomb structured body which makes it possible to clearly distinguish one side in which exhaust gases are allowed to flow in (hereinafter, also referred to as a gas flow-in side) and the other side from which exhaust gases are allowed to flow out (hereinafter, also referred to as a gas flow-out side).

The honeycomb structured body according to the present invention is a pillar-shaped honeycomb structured body in which a large number of through holes are placed in parallel with one another in the length direction with a wall portion interposed therebetween,
wherein information regarding an end face of the honeycomb structured body is displayed on a circumferential surface and/or the end face thereof by using a two-dimensional code.

The above information is desirably any one of information regarding the end faces, information regarding the manufacturing history and dimension precision, and information regarding the weight.

The honeycomb structured body is desirably configured by combining a plurality of pillar-shaped porous ceramic members with one another through a sealing material layer, each pillar-shaped porous ceramic member having a large number of through holes that are placed in parallel with one another in the length direction with a wall portion interposed therebetween.

Moreover, in the honeycomb structured body, each of the through holes desirably has one end which is sealed and the other end which is opened, and
all of or a part of said partition wall that separates said through holes with one another is configured to function as a filter for collecting particles.

Further, in the honeycomb structured body, a through hole having sealed ends on one face side and a through hole having sealed ends on the other face side are desirably different from each other in opening diameter, or different from each other in aperture ratio at each end face.

Further, the information regarding the end face, displayed on the circumferential surface of the honeycomb structured body, is desirably displayed on a portion closer to either of the corresponding end face.

Further, in the honeycomb structured body of the present invention, a catalyst for converting exhaust gases is desirably applied to the porous ceramics.

Further, the honeycomb structured body of the present invention desirably satisfies the relation 0.01≦(r/R)≦0.75 when the curvature radius of the circumference of the honeycomb structured body is represented by R, and the length in the circumferential direction of the honeycomb structured body of the two-dimensional code is represented by r.

### EFFECT OF THE INVENTION

In the honeycomb structured body according to the present invention, by displaying information of the honeycomb structured body with a two-dimensional code, a lot of information can be displayed in a small space, and further, a lot of information can be read out in a short time and unmistakably.

When information regarding an end face of said honeycomb structured body is displayed on a circumferential surface and/or the end face thereof, it is possible to clearly distinguish a side in which exhaust gases are allowed to flow in and the other side from which exhaust gases are allowed to flow out.

### BEST MODE FOR CARRYING OUT THE INVENTION

The following description will discuss embodiments of the honeycomb structured body according to the present invention.

The present invention is directed to a pillar-shaped honeycomb structured body in which a large number of through holes are placed in parallel with one another in the length direction with a wall portion interposed therebetween, wherein information regarding an end face of said honeycomb structured body is displayed on a circumferential surface and/or the end face thereof by using a two-dimensional code.

The honeycomb structured body according to the present invention may be any honeycomb structured body as long as it is made of a porous ceramic material and has a structure in which a large number of through holes are placed in parallel with one another in the length direction with a partition wall interposed therebetween. Therefore, the honeycomb structured body may be a pillar-shaped honeycomb structured body made of a single sintered body in which a large number of through holes are placed in parallel with one another in the length direction with a partition wall interposed therebetween, or may be constituted by a plurality of pillar-shaped honeycomb structured bodies which are combined with one another through sealing material layers, each pillar-shaped honeycomb structured bodies having a structure in which a large number of through holes are placed in parallel with one another in the length direction with a partition wall interposed therebetween.

Therefore, in the following explanations, when the two kinds of the honeycomb structured bodies are explained in a separate manner, the former structured body is referred to as the honeycomb structured body of a first embodiment, while the latter is referred to as the honeycomb structured body of a second embodiment. Further, in the case where it is not necessary to distinguish the two kinds, each of them is simply referred to as a honeycomb structured body.

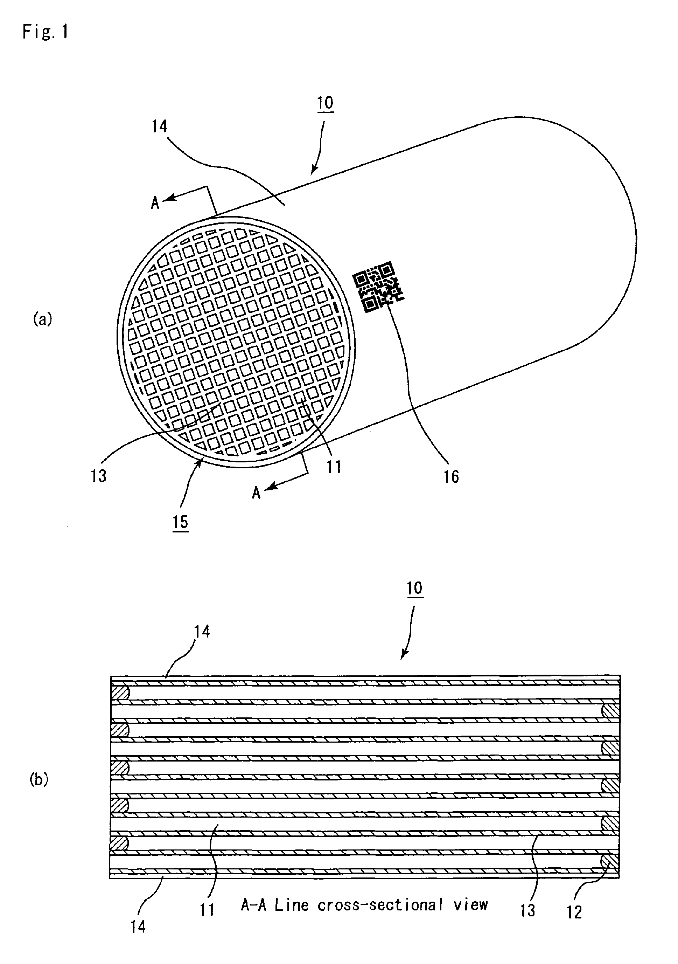

Referring to Fig. 1, the followingdescriptionwill discuss the first honeycomb structured body.

Fig. 1 (a) is a perspective view that schematically shows one example of the honeycomb structured body of the first embodiment, and Fig. 1 (b) is a cross-sectional view taken along line A-A of Fig. 1(a).

As shown in Fig. 1, the honeycomb structured body 10 of the first embodiment is provided with information which is displayed on the circumferential surface thereof by using a two-dimensional code 16.

This information includes information regarding the end faces which indicates that one end portion (side near to the two-dimensional code 16 (front side in Fig. 1)) is an exhaust gas inlet side, and the other end portion (side far from the two-dimensional code 16 (back side in Fig. 1)) is an exhaust gas outlet side.

Moreover, the honeycomb structured body 10 has a structure in which a sealing material layer 14 is formed on the peripheral portion of a pillar-shaped body 15 in which a large number of through holes 11 are placed in parallel with one another with a partition wall 13 interposed therebetween. The sealing material layer 14 is formed to reinforce the peripheral portion of the pillar-shaped body 15, adjust the shape, and also improve the heat-insulating property of the honeycomb structured body 10.

Here, in the honeycomb structured body 10 shown in Fig. 1, the partition wall 13 separating the through holes 11 are allowed to function as a particle collecting filter.

In other words, as shown in Fig. 1 (b), each of the through holes 11 formed in the pillar-shaped body 15 made of a single sintered body is sealed with a plug 12 at either of ends of its exhaust-gas inlet side and outlet side so that exhaust gases that have entered one through hole 11 are discharged from another through hole 11 after having always passed through the partition wall 13 that separates the through holes 11.

Therefore, the honeycomb structured body 10 shown in Fig. 1 is allowed to function as a honeycomb filter for purifying exhaust gases. When the honeycomb structured body is allowed to function as the honeycomb filter for purifying exhaust gases, the entire wall portion of the through holes may be configured to function as a particle-collecting filter or only a portion of the wall portion of the through holes may be configured to function as a particle-collecting filter.

Moreover, in the honeycomb structured body of the first embodiment, the end portions of the through holes need not necessarily be sealed, and when not sealed, the honeycomb structured body can be used as a catalyst supporting member on which, for example, an exhaust gas converting catalyst is supported.

In this manner, the honeycomb structured body 10 on which information regarding the end faces is displayed on its circumferential surface by using the two-dimensional code 16 is advantageous in that upon inserting it into a pipe forming an exhaust passage of an internal combustion engine, it becomes possible to prevent misplacement in the direction of the honeycomb structured body 10.

Here, in the case where a catalyst is placed inside the honeycomb structured body (inside the through holes) with a density gradient being formed therein and when a catalyst is applied to only the through holes that are open on the gas flow-out side, it becomes possible to prevent missetting in the amount of application of the catalyst.

Further, even in the case where a special processing, such as an erosion preventive processing or the like, is applied to the end face of the filter, the display of the information regarding the end faces, placed on the circumferential surface and/or the end face, makes it possible to easily distinguish the gas flow-in side and the gas flow-out side and consequently to prevent misplacement in the direction of the filter.

Moreover, other than information regarding the end faces, information regarding the dimension precision of the honeycomb, or information regarding the thickness or density of the retaining material in attaching to a metal case, or the dimension of the metal case can be provided. In such cases, the retaining ability of the honeycomb structured body can be improved.

In addition, for example, when information regarding the weight is provided, the addition amount of a catalyst can be adjusted.

In the case of the honeycomb structured body 10 shown in Fig. 1, by using the two-dimensional code, information regarding the exhaust gas inlet side and exhaust gas outlet side are displayed, however, said information regarding the end faces may be other indication.

Specifically, for example, itmaybe information regarding the end face in which there is more catalyst supporting amount and the like.

Said two-dimensional code is not particularly restricted, and a stack type two-dimensional code such as PDF 417 and Code 49 or a matrix type two-dimensional code such as Data Matrix, Veri Code, Maxi Code and QR code can be used.

Among these, matrix type ones are more desirable in view of not being dependent on directionality.

Moreover, two-dimensional codes are different in the information amount according to the size, thus it is possible to select the size of the two-dimensional code depending on the information amount to be displayed.

Additionally, it is also desirable to select the species of the two-dimensional code according to the detector species so as not to cause reading error.

Furthermore, the two-dimensional code may be drawn directly on a honeycomb structured body by a laser marker, ink, and the like, or may be displayed by an attachment of a seal, label and the like on which the two-dimensional code is displayed.

More specifically, for example, it is preferable to use ones on which the code is directly described by a laser marker, a coloring agent and the like, so that the code does not disappear by a heat treatment. This is because such information does not disappear during the manufacturing process or when the honeycomb structured body is subjected to a heat treatment after shipment and being used.

Of course, it is desirable that the brightness, contrast, etc. are adjusted depending on the background for clearly displaying information so as to be read out with a detector.

Moreover, the information displayed by using the two-dimensional code can indicate not only information regarding the end faces, but also various other information according to need which regards the honeycomb structured body, for example, information regarding the manufacturing history such as an orderer, deliverer, purchase order number, product name, size, cell density, manufacturing date, raw material, price, manufacture conditions, manufacturing line, manufacture equipment, lot number and manufacture number; information regarding the dimension precision of the circumferential portion; information regarding the weight which is necessary in selecting the catalyst addition amount;information necessary for quality preservation such as pressure drop, storage method, expiration date, disposal method, and points to remember; URL of Internet displaying a catalogue, and the like.

In addition, the two-dimensional code is capable of storing a lot of information, and therefore, it is possible to indicate such information as described above unmistakably on a small space on a portion of a side face of the honeycomb structured body, and the like. Moreover, when various information including one regarding end faces are displayed by using the two-dimensional code, these information can be read out correctly in a short time.

In the two-dimensional code, the ratio of the length (r mm) of circumferential direction of the honeycomb structured body relative to the curvature radius (R mm) of circumference of the honeycomb structured body is desirably 0.01≦ (r/R) ≦0.75.

More specifically, when r=15 mm, R is preferably 20 mm≦R≦1400 mm.

When the value of (r/R) is more than 0.75, sometimes it is impossible to read out information by a detector.

On the other hand, when (r/R) is less than 0.01, since the code becomes nearly flat, thus a stack type two-dimensional code may be used. But if the value becomes larger, it becomes possible to read information without regarding directionality by a matrix type bar code.

When there is no directionality in the two-dimensional code, information is desirably displayed on the bias (specifically the angle between each edge of the two-dimensional code and the length direction of the honeycomb structured body is more than 0 degree to less than 90 degrees). This is because the matrix type bar code can be read even a longitudinal or transversal portion is damaged, since it has repair function, but when it is located on the level, repair becomes hard.

The desirable angle between each edge of the two-dimensional code and the length direction of the honeycomb structured body is 5 to 85 degrees.

In the information displayed by using the two-dimensional code, URL of Internet can be described. Moreover, it is possible to describe the URL in a segmentalized form. Thus, consumers can confirm simple information such as a manufacturing lot on the Internet after the product is distributed as a final product. Therefore, without recovery, consumers can confirm the history of the product back to manufacturers using the Internet connection.

Moreover, the information regarding the end faces is not necessarily displayed on the circumferential surface of the honeycomb structured body, and may be placed on an end face of the honeycomb structured body.

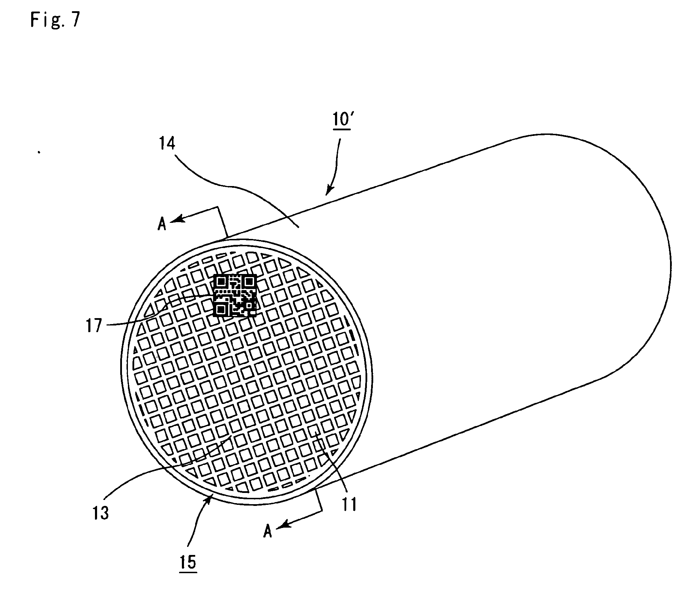

Fig. 7 is a perspective view that schematically shows another example of the honeycomb structured body of the first embodiment. As shown in Fig. 7, on the end face of the honeycomb structured body 10' of the first embodiment, a label 17 may be attached on which information regarding the end face is displayed by using the two-dimensional code. Here, the structure of the honeycomb structured body 10' is the same as the structure of the honeycomb structured body 10 shown in Fig. 1, except that it has a label attached to its end face and does not have information regarding the end faces displayed on its circumferential surface.

The display of information regarding the end face, given on the corresponding end face of the honeycomb structured body, makes it possible to confirm whether or not the assembling process has been accurately carried out after the installation process thereof in an exhaust-gas purifying apparatus (after installation in a metal case).

Moreover, in the case where the label is attached to the end face of the honeycomb structuredbody, the label canbe removed after the installation in an exhaust-gas purifying apparatus (after installation in a metal case).

Here, in the case where the display is given onto the end face of the honeycomb structured body, as shown in Fig. 7, it is desirable that a label is attached thereto and displayed.

Moreover, the information regarding the end faces may be given to both of the circumferential surface and the end faces.

Moreover, the opening diameter of the through holes formed in the honeycomb structured body of the first embodiment may be the same with respect to all the through holes, or may be different; however, the opening diameter of the gas flow-in cells is preferably made greater than the opening diameter of the gas flow-out cells. In other words, the honeycomb structured body of the first embodiment is preferably designed so that the through holes with the ends being sealed on one of face sides and the through holes with the ends being sealed at the other face side have mutually different opening diameters. Thus, it becomes possible to accumulate a large amount of ashes in the gas flow-in cells, to effectively burn the particulates, and consequently to effectively exert functions as the honeycomb filter for purifying exhaust gases.

Such information can also be displayed by using the two-dimensional code.

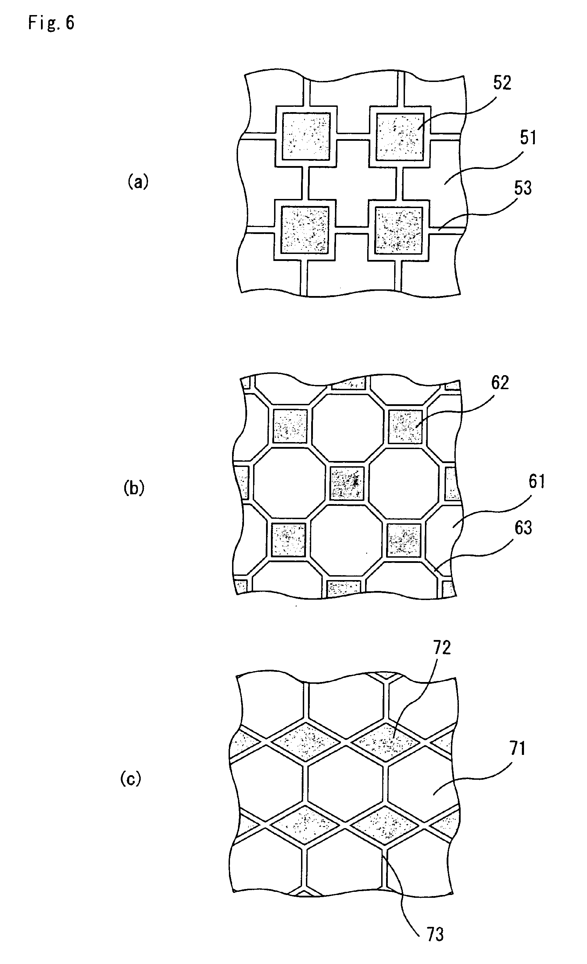

With respect to the embodiments in which the through holes with the ends being sealed on one of face sides and the through holes with the ends being sealed at the other face side are allowed to have mutually different opening diameters, not particularly limited, for example, structures as shown in Figs. 6 (a) to 6 (c) are proposed.

Fig. 6 (a) is a partial enlarged drawing that schematically shows one example of the end face on the gas flow-in side of the honeycomb structured body according to the present invention in which the through holes with the end faces on one of the sides being sealed and the through holes with the end faces on the other side being sealed are allowed to have mutually different opening diameters, and in Fig. 6(a), crisscross through holes 51 each of which has a large opening diameter with its end on the gas flow-out side being sealed with a plug are installed as gas flow-in cells, and square-shaped through holes each of which has a small opening diameter with its end on the gas flow-in side being sealed with a plug 52 are installed as gas flow-out cells, with the respective cells being separated by a wall portion (or a partition wall) 53.

Fig. 6 (b) is a partial enlarged cross-sectional view that schematically shows another example of the end face on the gas flow-in side of the honeycomb structured body according to the present invention in which the through holes with the end faces on one of the sides being sealed and the through holes with the end faces on the other side being sealed are allowed to have mutually different opening diameters, and in Fig. 6 (b), virtually octagonal-shaped through holes 61 each of which has a large opening diameter with its end on the gas flow-out side being sealed with a plug are installed as gas flow-in cells, and square-shaped through holes each of which has a small opening diameter with its end on the gas flow-in side being sealed with a plug 62 are installed as gas flow-out cells, with the respective cells being separated by a wall portion (or a partition wall) 63.

Fig. 6 (c) is a partial enlarged cross-sectional view that schematically shows still another example of the end face on the gas flow-in side of the honeycomb structured body according to the present invention in which the through holes with the end faces on one of the sides being sealed and the through holes with the end faces on the other side being sealed are allowed to have mutually different opening diameters, and in Fig. 6 (c), virtually hexagonal-shaped through holes 71 each of which has a large opening diameter with its end on the gas flow-out side being sealed with a plug 72 are installed as gas flow-in cells, and square-shaped through holes each of which has a small opening diameter with its end on the gas flow-in side being sealed with a plug 72 are installed as gas flow-out cells, with the respective cells being separated by a wall portion (or a partition wall) 73.

Here, in the honeycomb structured body of the first embodiment, the aperture ratios of the through holes of each of the end faces may be the same or different from each other; however, in the case where the honeycomb structured body of the first embodiment is arranged such that the respective end faces havemutuallydifferent aperture ratiosbetween the throughholes with the end faces on one of the sides being sealed and the through holes with the end faces on the other side being sealed, the aperture ratio on the gas flow-in side is preferablymade greater. Thus, it becomes possible to accumulate a large amount of ashes in the gas flow-in cells, to suppress an increase in the pressure loss, and consequently to allow the honeycomb filter for purifying exhaust gases to effectively exert corresponding functions. Here, with respect to specific shapes of the through holes in the case where the aperture ratios on the respective end faces are different from each other, for example, shapes as shown in the above-mentioned Figs. 6 (a) to 6 (c) are proposed.

Moreover, with respect to the shape of the honeycomb structured body of the first embodiment, not limited to the column shape shown in Fig. 1, any desired shape such as a column shape with a compressed round shape in its cross section like an elliptical pillar shape and a rectangular pillar shape may be used.

The following description will discuss the material and the like of the honeycomb structured body of the first embodiment.

As the material for said honeycomb structured body, there may be mentioned porous ceramics, metals, and the like. Among these, porous ceramics are preferred.

With respect to said porous ceramics, not particularly limited, examples thereof include: nitride ceramics such as aluminum nitride, silicon nitride, boron nitride, titanium nitride and the like; carbide ceramics such as silicon carbide, zirconium carbide, titanium carbide, tantalum carbide, tungsten carbide and the like; and oxide ceramics such as alumina, zirconia, cordierite, mullite and the like; moreover, in general, oxide ceramics such as cordierite and the like is used. These materials make it possible to cut manufacturing costs, and these materials have a comparatively small coefficient of thermal expansion, and are less likely to cause oxidation during use. Here, silicon-containing ceramics in which metallicsilicon is blended in the above-mentioned ceramics and ceramics that are combined by silicon and a silicate compound may also be used, and, for example, a material prepared by blending metal silicon in silicon carbide is preferably used.

Moreover, in the case where the honeycomb structured body of the first embodiment is used as a honeycomb filter for purifying exhaust gases, the average pore diameter of the porous ceramic is preferably set in a range from 5 to 100 µm. The average pore diameter of less than 5 µm tends to cause clogging of particulates easily. In contrast, the average pore diameter exceeding 100 µm tends to cause particulates to pass through the pores; thus, the particulates cannot be collected, making the honeycomb structured body unable to function as a filter.

Here, the pore diameter of the porous ceramic member can be measured by using a known method, such as a mercury press-in method or the like, and a measuring method using a scanning electronic microscope (SEM).

Further, in the case where the honeycomb structured body is used as a honeycomb filter for purifying exhaust gases, although not particularly limited, the porosity of the porous ceramic member is preferably set to about 40 to 80%. When the porosity is less than 40%, the honeycomb structured body is more likely to cause clogging, while the porosity exceeding 80% causes degradation in the strength of the pillar-shaped bodies; thus, that it might be easily broken.

Here, the above-mentioned porosity can be measured by using a known method, such as a mercury press-in method, Archimedes method, a measuring method using a scanning electronic microscope (SEM), and the like.

With respect to ceramic particles to be used upon manufacturing such a pillar-shaped body, although not particularly limited, those which are less likely to shrinkage in the succeeding sintering process are preferably used, and for example, those particles, prepared by combining 100 parts by weight of ceramic particles having an average particle size from 0.3 to 50 µm with 5 to 65 parts by weight of ceramic particles having an average particle size from 0.1 to 1.0 µm, are preferably used. By mixing ceramic powders having the above-mentioned respective particle sizes at the above-mentioned blending ratio, it is possible to provide a pillar-shaped body made of porous ceramics.

In the case where, as shown in Fig. 1, the honeycomb structured body of the first embodiment has a structure in which the end portion of each of the through holes is sealed by a plug, with respect to the material for the plug, not particularly limited, for example, the same material as the material for the pillar-shaped body may be used.

As shown in Fig. 1, the honeycomb structured body of the first embodiment is preferably provided with a sealing material layer formed on the circumference thereof, and in this case, with respect to the material for forming the sealing material layer, not particularly limited, examples thereof include a material made from an inorganic binder, an organic binder and inorganic fibers and/or inorganic particles.

With respect to the inorganic binder, for example, silica sol, alumina sol and the like may be used. Each of these may be used alone or two or more kinds of these may be used in combination. Among the inorganic binders, silica sol is more preferably used.

Moreover, the lower limit of the content of the inorganic binder is preferably set to 1% by weight, more preferably, to 5% by weight, on the solid component basis. The upper limit of the content of the inorganic binder is preferably set to 30% by weight, more preferably, to 15% by weight, most preferably to 9% by weight, on the solid component basis. The content of the inorganic binder of less than 1% by weight tends to cause degradation in the bonding strength; in contrast, the content exceeding 30% by weight tends to cause degradation in the thermal conductivity.

With respect to the organic binder, examples thereof include polyvinyl alcohol, methyl cellulose, ethyl cellulose and carboxymethyl cellulose. Each of these may be used alone or two or more kinds of these may be used in combination. Among the organic binders, carboxymethyl cellulose is more preferably used.

The lower limit of the content of the above-mentioned organic binder is preferably set to 0.1% by weight, more preferably, to 0. 2% by weight, mostpreferably, to 0.4% by weight, on the solid component basis. The upper limit of the content of the organic binder is preferably set to 5.0% by weight, more preferably, to 1.0% by weight, most preferably to 0.6% by weight, on the solid component basis. The content of the organic binder of less than 0.1% by weight tends to cause a difficulty in preventing migration of the sealing material layer; in contrast, the content exceeding 5.0% by weight tends to cause too much organic component in the rate with respect to the honeycomb structured body to be manufactured depending on the thickness of the sealing material layer, resulting in the necessity of having to carry out a heating process as the post-process after manufacturing a honeycomb filter.

With respect to the inorganic fibers, examples thereof include ceramicfibers,such assilica-alumina,mullite,alumina, silica and the like. Each of these may be used alone or two or more kinds of these may be used in combination. Among the inorganic fibers, silica-alumina fibers are more preferably used.

The lower limit of the content of the above-mentioned inorganic fibers is preferably set to 10% by weight, more preferably, to 20% by weight, on the solid component basis. The upper limit of the content of the inorganic fibers is preferably set to 70% by weight, more preferably, to 40% by weight, most preferably to 30% by weight, on the solid component basis. The content of the inorganic fibers of less than 10% by weight tends to cause degradation in the elasticity and strength, while the content exceeding 70% by weight tends to cause degradation in the thermal conductivity and a reduction in its effects as an elastic member.

With respect to the inorganic particles, examples thereof include carbides, nitrides and the like, and specific examples include inorganic powder or whiskers made from silicon carbide, silicon nitride and boron nitride. Each of these may be used alone, or two or more kinds of these may be used in combination. Among the inorganic particles, silicon carbide having superior thermal conductivity is preferably used.

The lower limit of the content of the above-mentioned inorganic particles is preferably set to 3% by weight, more preferably, to 10% by weight, most preferably, to 20% by weight, on the solid component basis. The upper limit of the content of the inorganic particles is preferably set to 80% by weight, more preferably, to 60% by weight, most preferably to 40% by weight, on the solid component basis. The content of the inorganic particles of less than 3% by weight tends to cause a reduction in the thermal conductivity, while the content exceeding 80% by weight tends to cause degradation in the adhesive strength, when the sealing material layer is exposed to high temperature.

The lower limit of the shot content of the above-mentioned inorganic fibers is preferably set to 1% by weight, while the upper limit thereof is preferably set to 10% by weight, more preferably, to 5% by weight, most preferably to 3% by weight. Moreover, the lower limit of the fiber length is preferably set to 1 mm, while the upper limit thereof is preferably set to 100 mm, more preferably, to 50 mm, most preferably, to 20 mm.

It is difficult to set the shot content to less than 1% by weight in the manufacturing, and the shot content exceeding 10% by weight tends to damage the circumference of the pillar-shaped body. Moreover, the fiber length of less than 1 mm makes it difficult to form a honeycomb structured body with proper elasticity, while the fiber length exceeding 100 mm tends to form a shape like a pill to cause insufficient dispersion of the inorganic particles, failing to make the thickness of the sealing material layer thinner.

The lower limit of the particle size of the inorganic particles is preferably set to 0.01 µm, more preferably, to 0.1 µm. The upper limit of the particle size of the inorganic particles is preferably set to 100 µm, more preferably, to 15 µm, most preferably, to 10 µm. The particle size of the inorganic particles of less than 0.01 µm tends to cause high costs, while the particle size of the inorganic particles exceeding 100 µm tends to cause a reduction in the bonding strength and thermal conductivity.

Here, the honeycomb structuredbodyof the first embodiment can be used as a catalyst supporting member, and in this case, a catalyst (exhaust gas converting catalyst) used for converting exhaust gases is supported on the honeycomb structured body.

By using the honeycomb structured body as a catalyst supporting member, toxic components in exhaust gases, such as HC, CO, NOx and the like, and HC and the like derived from organic components slightly contained in the honeycomb structured body can be surely converted.

With respect to the exhaust gas converting catalyst, not particularly limited, examples thereof include noble metals such as platinum, palladium, rhodium and the like. Each of these noble metals may be used alone, or two or more kinds of these may be used in combination.

Here, the exhaust gas converting catalyst, made from the above-mentioned noble metal is a so-called three-way catalyst, and with respect to the above-mentioned exhaust gas converting catalyst, not particularly limited to the above-mentioned noble metals, any desired catalyst may be used as long as it can convert the toxic components, such as CO, HC, NOx and the like, in exhaust gases. For example, in order to convert NOx in exhaust gases, an alkali metal, an alkali-earth metal and the like may be supported thereon. Moreover, a rare-earth oxide and the like may be added as a promoter.

When the exhaust gas converting catalyst is supported on the honeycomb structured body of the first embodiment in this manner, the toxic components such as CO, HC, NOx and the like contained in exhaust gases discharged from an internal combustion engine such as an engine are made in contact with the exhaust gas converting catalyst so that reactions, indicated by the following reaction formulas (1) to (3), are mainly accelerated.

CO + (1/2)O₂ → CO₂ (1)

CₘHₙ + (m + (n/4))O₂ → mCO₂ + (n/2)H₂O (2)

CO + NO → (1/2)N₂ + CO₂ (3)

Through the above-mentioned reaction formulas (1) and (2), CO and HC, contained in exhaust gases, are oxidized to CO₂ and H₂O, and through the above-mentioned reaction formula (3), NOx contained in the exhaust gases is reduced by CO to N₂ and CO₂.

In other words, in the honeycomb structured body in which the exhaust gas converting catalyst is supported, the toxic components such as CO, HC, NOx and the like contained in exhaust gases are converted into CO₂, H₂O and N₂, and externally discharged.

Moreover, in the case where the exhaust gas converting catalyst is supported in the honeycomb structured body of the first embodiment, the catalyst may be supported uniformly inside the through hole, or may be supported on only a portion area inside the through hole, or may be supported in a manner so as to have a density gradient from one of the gas flow-in side and gas flow-out side toward the other side.

In addition, information how the catalyst is supported can also be displayed by using the two-dimensional code.

Here, the honeycomb structuredbodyof the first embodiment may have a structure in which: end portions of the through holes are sealed so as to function as a honeycomb filter for purifying exhaust gases and an exhaust gas converting catalyst is supported thereon.

In this case, the exhaust gas converting catalyst may be supported on both of the gas flow-in cell and the gas flow-out cell, or may be supported on either one of the cells; however, it is preferably supported on only the gas flow-out cell. This is because, the resulting structure is allowed to effectively exert both of the functions as the honeycomb filter for purifying exhaust gases and the functions for converting exhaust gases by the use of the exhaust gas converting catalyst.

Moreover, in the case where a catalyst is supported on the honeycomb structured body of the first embodiment, in order to improve the reactivity of the catalyst, the honeycomb structured body may have thin walls (0.01 to 0.2 mm) with a high density (400 to 1500 cells/square inch (62 to 233 cells/cm²)) so that the specific surface area is increased. This structure also makes it possible to improve the temperature-raising property by utilizing exhaust gases.

When the reactivity of the catalyst is improved as described above, in particular, when the thickness of the partition wall is made thinner, the honeycomb structured body becomes more likely to suffer erosion (wind erosion) due to exhaust gases. For this reason, the strength of the end portion is preferably improved by the following methods so as to prevent erosion (erosion preventive property) of the end portion on the exhaust gas flow-in side (preferably, with respect to the thickness of a portion ranging from 1 to 10 mm in the end).

More specifically, the following methods are proposed: a method in which the partition wall of the end portion is made 1.1 to 2.5 times thicker than the base member; a method in which a glass layer is installed or the ratio of the glass component is made higher (erosion is prevented by allowing the glass to fuse rather than the base member); a method in which the pore capacity and the pore diameter are made smaller to form a dense structure (more specifically, the porosity at the end portion is made lower than the porosity of the base member except for the end portion by 3% or more or, preferably the porosity of the end portion is set to 30% or less) ; a method in whichphosphate, aluminum diphosphate, a composite oxide between silica and alkali metal, silica sol, zirconia sol, alumina sol, titania sol, cordierite powder, cordierite cervene (scrap), talc, alumina or the like is added thereto and the corresponding portion is sintered to form a reinforced portion, and a method in which the catalyst layer is made thicker (to prepare a thickness of 1.5 times or less of the base member).

Next, the following description will discuss a manufacturingmethod (hereinafter, also referred to as the first manufacturing method) for the pillar-shaped honeycomb structured body made of porous ceramics of the first embodiment.

First, a material paste is prepared by adding a binder and a dispersant solution to the ceramic powder.

With respect to the above-mentioned binder, not particularly limited, examples thereof include: methylcellulose, carboxy methylcellulose, hydroxy ethylcellulose, polyethylene glycol, phenolic resin and epoxy resin.

In general, the blended amount of the above-mentioned binder is preferably set to 1 to 10 parts by weight with respect to 100 parts by weight of the ceramic powder.

With respect to the dispersant solution, not particularly limited, examples thereof include: an organic solvent such as benzene and the like; alcohol such as methanol and the like; water and the like.

An appropriate amount of the above-mentioned dispersant solution is mixed therein so that the viscosity of the material paste is set within a fixed range.

These ceramic powder, binder and dispersant solution are mixed by an attritor or the like, and sufficiently kneaded by a kneader or the like, and then extrusion-molded so that a pillar-shaped formed body having virtually the same shape as the pillar-shaped body 15 shown in Fig. 1.

Moreover, a molding auxiliary may be added to the material paste, if necessary.

With respect to the molding auxiliary, not particularly limited, examples thereof include: ethylene glycol, dextrin, fatty acid soap, polyalcohol and the like.

Next, the ceramic formed body is dried by using a microwave drier or the like.

Then, if necessary, a opening-sealing process is carried out so that predetermined through holes are filled with a plug, and the resulting formed body is again subjected to a drying process using a microwave drier or the like. With respect to the plug, not particularly limited, for example, the same material as the material paste may be used.

When the opening-sealing process is carried out in the above-mentioned process, a honeycomb structured body, which functions as a honeycomb filter for purifying exhaust gases, is manufactured through post processes.

Next, the ceramic formed body is subjected to degreasing and firing processes under predetermined conditions so that a pillar-shaped body 15 made of porous ceramics is manufactured.

Thereafter, a sealing material layer 14 is formed on the circumference of the pillar-shaped body 15 thus manufactured.

More specifically, in the sealing material layer-forming process, first, the pillar-shaped body 15 is rotated around an axis on which it is supported in the length direction. Next, a sealing material paste is adhered to the circumference of the rotating pillar-shaped body 15 to form a sealing material paste layer.

Although not particularly limited, the rotation speed of the pillar-shaped body 15 is preferably set in a range from 2 to 10 min⁻¹.

With respect to the sealing material paste, not particularly limited, for example, the above-mentioned inorganic binder, organic binder, material containing inorganic fibers and inorganic particles and the like can be used.

Moreover, the sealing material paste may contain a small amount of moisture, a solvent and the like, and normally, these moisture, solvent and the like are almost entirely scattered through a heating process and the like after the coating process of the sealing material paste.

In order to soften the sealing material paste and impart flowability thereto so as to be easily applied, in addition to the above-mentioned inorganic fibers, inorganic binder, organic binder and inorganic particles, this sealing material paste may contain moisture and another solvent such as acetone, alcohol or the like, in a range from 35 to 65% by weight with respect to the total weight, and the viscosity of the sealing material paste is preferably set in a range from 15 to 25 P·s (10000 to 20000 cps (cP)).

Next, the sealingmaterial paste layer thus formed is dried at a temperature of about 120°C to evaporate moisture to form a sealing material layer 14 so that a honeycomb structured body 10 having the sealing material layer 14 formed on the circumference on the pillar-shaped body 15 as shown in Fig. 1 is prepared.

Next, information regarding the end faces of the honeycomb structured body is displayed on the circumferential surface and/or an end face of the honeycomb structured body thus manufactured by using the two-dimensional code.

With respect to the method for displaying the information by using the two-dimensional code, processes such as an ink coating process, a laser marker drawing, and the like may be used.

In the case of the ink coating, a pigment containing an inorganic oxide such as iron oxide, copper oxide, a cobalt compound such as CoO·nAl₂O₃ or CO₃(PO₄)₂, TiO₂ and SiO₂, is preferably used so as to prevent erasure due to the use of high-temperature exhaust gases. Moreover, the pigment may be carbon, and the like.

Here, an appropriate method may be selected from the above-mentioned methods and used by taking into consideration the material, shape and the like of the honeycomb structured body.

By using the above-mentioned processes, it becomes possible to manufacture the honeycomb structured body of the first embodiment.

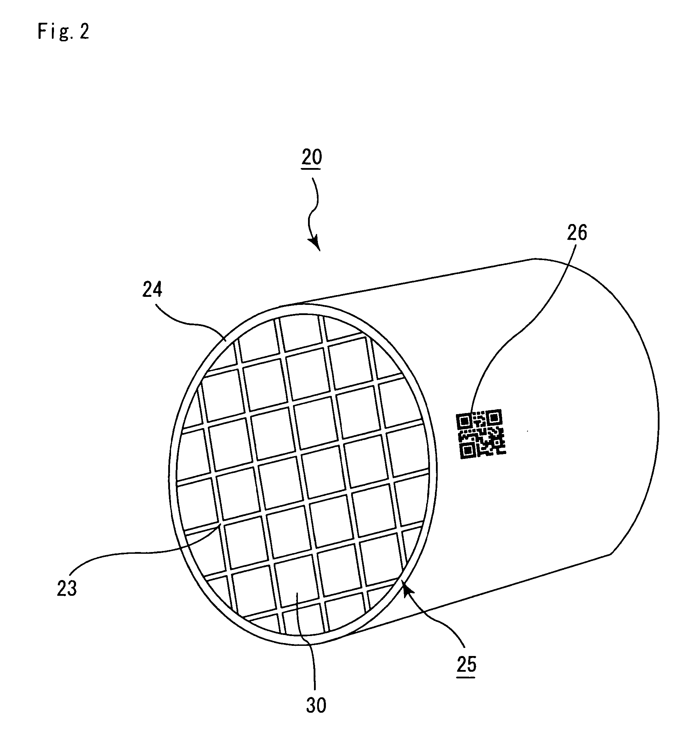

Referring to Figs. 2 and 3, the following description will discuss a honeycomb structured body of the second embodiment.

Fig. 2 is a perspective view that schematically shows one example of the honeycomb structured body of the second embodiment.

Fig. 3 (a) is a perspective view that schematically shows a porous ceramic member for use in the honeycomb structured body of the second embodiment shown in Fig. 2, and Fig. 3(b) is a cross-sectional view taken along line B-B of Fig. 3(a).

As shown in Fig. 2, the honeycomb structured body 20 of the second embodiment is provided with information regarding its end faces, which is displayed on the circumferential surface thereof, in the same manner as the honeycomb structured body 10 of the first embodiment. In other words, information that indicates the gas flow-in side and the gas flow-out side of the honeycomb structured body 10 is displayed on the circumferential surface thereof by using the two-dimensional code 26.

Moreover, the honeycomb structured body 20 has a structure in which a plurality of porous ceramic members 30 are combined with one another through sealing material layers 23 to form a ceramic block 25, and a sealing material layer 24 is formed on the circumference of this ceramic block 25. Here, as explained by reference to Fig. 3, the porous ceramicmember 30 has a structure in which a large number of through holes 31 are placed in parallel with one another in the length direction so that a partition wall 33 separating the through holes 31 are allowed to function as a particle collecting filter.

Here, the sealing material layer 24 is placed so as to prevent exhaust gases from leaking from the peripheral portion of the ceramic block 25, when the honeycomb structured body 20 is placed in an exhaust passage of an internal combustion engine.

Therefore, the honeycomb structured body 20 shown in Figs. 2 and 3 is allowed to function as a honeycomb filter for purifying exhaust gases.

Herein, the two-dimensional code 26 is displayed on the sealing material layer 24, but in this case, if possible, it is desirable that the two-dimensional code 26 is displayed on the portion of the sealing material layer 24 which has the porous ceramic member 30 below. It is because when the code is displayed on the portion of the sealing material layer 24 which has the sealing material layer 23 below, the sealing material layer causes irregularities on the two-dimensional code due to poor strength, etc. in some cases, or in a severe case, the two-dimensional code may be destroyed and information may become difficult to be read out.

Here, in the same manner as the honeycomb structured body of the first embodiment, in the honeycomb structured body of the second embodiment also, the end portions of the through holes neednotnecessarilybe sealed, and when not sealed, the honeycomb structured body can be used as a catalyst supporting member on which, for example, an exhaust gas converting catalyst can be supported.

In the same manner as the honeycomb structured body of the first embodiment, the honeycomb structured body 20 on which the information regarding the end faces is displayed on its circumferential surface by using the two-dimensional code 26 is advantageous in that upon inserting it into a pipe forming an exhaust passage of an internal combustion engine, it becomes possible to prevent misplacement in the direction of the honeycomb structured body 20.

Here, in the case where a catalyst is placed inside the honeycomb structured body (inside the through holes) with a density gradient being formed therein and when a catalyst is applied to only the through holes that are open on the gas flow-out side, it becomes possible to prevent missetting in the amount of application of the catalyst.

Moreover, as the information regarding the end face displayed by using the two-dimensional code, there may be mentioned the same ones as in the honeycomb structured body of the first embodiment. In addition, the display method of said two-dimensional code is also the same as in the honeycomb structured body of the first embodiment.

Also in the honeycomb structured body of the second embodiment, in the same manner as in the honeycomb structured body of the first embodiment, the information regarding the end face is not necessarily displayed on the circumferential surface of the honeycomb structured body, and may be placed on an end face of the honeycomb structured body. Moreover, the information may be placed on both of the circumferential surface and the end face.

Moreover, in the same manner as the opening diameter and the aperture ratio of the through holes formed in the honeycomb structured body of the first embodiment, the opening diameter and the aperture ratio of the through holes formed in the honeycomb structured body of the second embodiment may be the same with respect to all the through holes, or may be different with each other; however, the opening diameter or the aperture ratio of the gas flow-in cells is preferably made greater than the opening diameter or the aperture ratio of the gas flow-out cells.

In other words, the honeycomb structured body of the first embodiment is preferably designed so that the through holes with the ends being sealed on one of face sides and the through holes with the ends being sealed at the other face side have mutually different opening diameters. This is because, it becomes possible to accumulate a large amount of ashes in the gas flow-in cells, to effectively burn the particulates, and consequently to effectively exert functions as the honeycomb filter for purifying exhaust gases.

Moreover, for the same reason as described above, the honeycomb structured body of the second embodiment may be designed so that the respective end faces have mutually different aperture ratios between the through holes with the end faces on one of the sides being sealed and the through holes with the end faces on the other side being sealed.

With respect to the embodiments of the structure in which the respective end faces have mutually different opening diameters and different aperture ratios between the throughholes with the end portion on one of the sides being sealed and the through holes with the end portion on the other side being sealed, in the same manner as the honeycomb structured body of the first embodiment, not particularly limited, for example, those structures as shown in Figs. 6(a) to 6(c) are used.

Moreover, in the honeycomb structured body of the second embodiment, the end face on one of the sides is preferably subjected to a flattening treatment, and in this case, the flatness of the flattened end face is preferably set to 2 mm or less. When the flatness of the end face on one of the sides is set to 2 mm or less, the honeycomb structured body becomes less likely to cause problems upon being inserted into the pipe.

Furthermore, when the end face on one side has been subjected to the flattening treatment, the corresponding information regarding the end faces is preferably displayed on the circumferential surface and/or the end face of the honeycomb structured body by using the two-dimensional code.

Here, in the honeycomb structured body of the second embodiment, the flattening treatment may be carried out on both of the end faces; however, as described earlier, such a treatment is disadvantageous from the economic viewpoint.

In the present specification, the expression, "the flatness of the end face of the honeycomb structured body is set to 2 mm or less", refers to the fact that on the end face of the honeycomb structured body, the distance of the highest protrusion from the averaged position and the distance of the lowest recess from the averaged position are set to 2 mm or less. The flatness of the end face of the honeycomb structured body can be determined by the following processes: for example, the height in the end face direction of the honeycomb structured body is measured at four positions or more, the average of the measured values is calculated, and the difference of the distance between the average value of the measured values and the maximum value is found.

Themethod for the above-mentioned flattening process will be described later.

Moreover, in the honeycomb structured body of the second embodiment, instead of the flattening process to be carried out on the end face of one of the sides, a plurality of the porous ceramicmembers maybe combined with one another so as to eliminate irregularities of the porous ceramic members on the end face of one side. The reason for this will be described later.

Moreover, with respect to the shape of the honeycomb structured body of the second embodiment, not limited to the column shape shown in Fig. 2, any desired shape, such as a column shape with a compressed round shape in its cross section like an elliptical column shape and a rectangular pillar shape, may be used.

The following description will discuss the material and the like of the honeycomb structured body of the second embodiment.

As the material for said honeycomb member, there may be mentioned porous ceramics, metals, and the like. Among these, porous ceramics are preferred.

With respect to said porous ceramic, not particularly limited, the same materials as those described in the honeycomb structured body of the first embodiment, such as nitride ceramics, carbide ceramics, oxide ceramics and the like, may be used, and among these, silicon carbide, which has high heat resistance, superior mechanical properties and high heat conductivity, is more preferably used. Moreover, silicon-containing ceramics in which metallic silicon is blended in the above-mentioned ceramics and ceramics that are combined by silicon and a silicate compound may also be used, and, for example, a material prepared by blending metal silicon in silicon carbide is more preferably used.

With respect to the average pore diameter and the porosity of the porous ceramic member, not particularly limited, the same average pore diameter and porosity as those of the honeycomb structured body of the first embodiment are preferably used, and with respect to the particle size of ceramic particles to be used for manufacturing the porous ceramic member also, not particularly limited, the same particle size as that of the honeycomb structured body of the first embodiment may be used.

Moreover, the honeycomb structured body of the second embodiment can be used as a catalyst supporting member, and in this case, an exhaust gas converting catalyst is supported on the honeycomb structured body.

With respect to the exhaust gas converting catalyst, the same exhaust gas converting catalyst as the catalyst to be used when the honeycomb structured body of the first embodiment is used as the catalyst supporting member may be used.

Here, in the same manner as the honeycomb structured body of the first embodiment, the exhaust gas converting catalyst may be supported uniformly inside the through hole of the honeycomb structured body of the second embodiment, or may be supported on only one area inside the through hole, or may be supported in a manner so as to have a density gradient from one of the gas flow-in side and gas flow-out side toward the other side.

Here, in the same manner as the honeycomb structured body of the first embodiment, the honeycomb structured body of the second embodiment may have a structure in which: end portions of the through holes are sealed so as to function as a honeycomb filter for purifying exhaust gases and an exhaust gas converting catalyst is supported thereon.

In this case, the exhaust gas converting catalyst may be supported on both of the gas flow-in cell and the gas flow-out cell, or may be supported on either one of the cells; however, it is preferably supported on only the gas flow-out cell. Thus, the resulting structure is allowed to effectively exert both of the functions as the honeycomb filter for purifying exhaust gases and the functions for converting exhaust gases.

Moreover, in the case where a catalyst is supported on the honeycomb structured body of the second embodiment, in order to improve the reactivity of the catalyst, the honeycomb structured body may have thin walls (0.01 to 0.2 mm) with a high density (400 to 1500 cells/square inch (62 to 233 cells/cm²)) so that the specific surface area is increased. This structure also makes it possible to improve the temperature-raising property by utilizing exhaust gases.

When the reactivity of the catalyst is improved as described above, in particular, when the thickness of the partition wall is made thinner, the honeycomb structured body becomes more likely to suffer erosion (wind erosion) due to exhaust gases. For this reason, the strength of the end portion is preferably improved by the following methods so as to prevent erosion (erosion prevention property) of the end portion on the exhaust gas flow-in side (with respect to the thickness of a portion ranging from 1 to 10 mm in the end).

More specifically, the following methods are proposed: a method in which the partition wall of the end portion is made 1.1 to 2.5 times thicker than the base member; a method in which a glass layer is installed or the ratio of the glass component is made higher (erosion is prevented by allowing the glass to fuse rather than the base member); a method in which the pore capacity and the pore diameter are made smaller to form a dense structure (more specifically, the porosity at the end portion is made lower by 3% or more than the porosity of the base member except for the end portion or, preferably the porosity of the end portion is set to 30% or less) ; a method in which phosphate, aluminum diphosphate, a composite oxide between silica and alkali metal, silica sol, zirconia, alumina sol, titaniasol, cordierite powder, cordierite cervene(scrap), talc, alumina or the like is added thereto and the corresponding portion is sintered to form a reinforced portion, and a method in which the catalyst layer is made thicker (to prepare a thickness of 1.5 times or less the base member).

As shown in Figs. 2 and 3, the honeycomb structured body of the second embodiment preferably has a structure in which a sealing material layer is formed on the circumference thereof, and in this structure, with respect to the material constituting the sealing material layer, the same material as that of the sealing material layer forming on the honeycomb structured body of the first embodiment may be used.

Next, referring to Figs. 2 to 4, the following description will discuss a method (hereinafter, also referred to as the second manufacturing method) for manufacturing a honeycomb structured body of the second embodiment in which a plurality of porous ceramic members are combined with one another through a sealing material layer.

More specifically, a ceramic laminated body that constitutes a ceramic block 25 is manufactured.

The above-mentioned ceramic laminated body has a pillar-shaped structure in which a plurality of rectangular pillar-shaped porous ceramic members 30, each having a structure in which a large number of through holes 31 are placed in parallel with one another in the length direction with a partition wall 33 interposed therebetween, are combined with one another through sealing material layers 23.

In order to manufacture the porous ceramic member 30, first, a mixed composition is prepared by adding a binder and a dispersant solution to the above-mentioned ceramic powder.

With respect to the method for preparing the mixed composition, not particularly limited, for example, the same method as the method for preparing the material paste explained in the first manufacturing method may be used.

Next, the above-mentioned mixed composition is mixed by an attritor or the like, and sufficiently kneaded by a kneader or the like, and then extrusion-molded so that a pillar-shaped raw formed body having virtually the same shape as the porous ceramic member 30 shown in Fig. 3 is manufactured.

After the above-mentioned raw formed body has been dried by using a microwave drier or the like, a opening-sealing process which injects a plug to predetermined through holes, and this is again subjected to a drying process using a microwave drier or the like.

With respect to the above-mentionedplug, not particularly limited, for example, the same material as the above-mentioned mixed composition may be used.

Next, the raw formed body that has been subjected to the opening-sealing process is heated at 400 to 650°C in an oxygen-containing atmosphere so as to be degreased so that the binder and the like are volatilized, as well as being decomposed and eliminated, to allow only the ceramic powder to remain therein.

Next, the formed body that has been degreased is sintered by heating it at 1400 to 2200°C in an inert gas atmosphere such as nitrogen and argon so that the ceramics powder is sintered to produce a porous ceramic member 30.

Next, as shown in Fig. 4, in order to form the ceramic laminated body, first, porous ceramic members 30 are placed on a base 40 the upper portion of which is designed to have a V-shape in its cross-section so as to allow the porous ceramic members 30 to be stacked thereon in a tilted manner, and a plug paste to form a sealing material layer 23 is then applied onto two side faces 30a and 30b facing upward with an even thickness to form a paste layer 41; thereafter, a laminating process for forming another porous ceramic member 30 on this paste layer is successively repeated so that a pillar-shaped ceramic laminated body having a predetermined size is manufactured.

At this process, upon assembling the porous ceramicmembers 30, they may be stacked so as to align only the end face on one of the sides of the porous ceramic members. This arrangement makes it possible to provide the following advantages.

In other words, a plurality of porous ceramic members 30, formed through the above-mentioned method, have slight deviations in the shape thereof due to shrinkage errors and warps that occur at the time of drying and sintering processes. For this reason, in the ceramic laminated body formed by stacking the porous ceramic members 30, protruded portions and recessed portions of the porous ceramic members tend to appear on each of the end faces thereof, and in this case, as has been described earlier, problems tend to occur upon insertion of the honeycomb structured body into the pipe.

Here, in the case where the porous ceramic members are stacked so as to align only the end face on one of the sides of the porous ceramic laminated body, in the manufactured honeycomb structured body, although there are protrusions and recessions on the end face on the other side, there are aligned end face on one of the sides.

For this reason, in the case where the honeycomb structured body is inserted into the pipe, it becomes possible to avoid the above-mentioned problems by inserting it from the side having the aligned end face.

Therefore, in the honeycomb structured body of the second embodiment, upon manufacturing, the porous ceramic members are stacked so as to align only the end face on one of the sides, and information regarding the end faces is given so as to indicate the aligned end face so that it becomes possible to solve the problem caused upon insertion into the pipe.

Further, this ceramic laminated body is heated in a temperature range from 50 to 100°C for about an hour so that the paste layer is dried and solidified to form a sealing material layer 23; thereafter, by cutting the peripheral portion thereof by using a diamond cutter or the like into a shape as shown in Fig. 2, a ceramic block 25 is formed.

With respect to the material for forming the sealing material paste that forms the sealing material layer 23, not particularly limited, for example, the same material as that of the sealing material paste described in the first manufacturing method may be used.

Moreover, prior to cutting the peripheral portion of the dried ceramic laminated body, the ceramic laminated body may be cut perpendicularly to its length direction, if necessary.

By carrying out this process, the length of the manufactured honeycomb structured body in the length direction is set to a predetermined length, and this process also corresponds to the flattening treatment carried out on the end faces of the honeycomb structured body so that, in particular, the flatness of the end face is set to 2 mm or less.

Here, the term, "length direction of the ceramic laminated body", refers to a direction in parallel with the through holes of the porous ceramic members constituting the ceramic laminated body, and, for example, even in the case where, upon manufacturing a ceramic laminatedbody, a large number of porous ceramic members are laminated and bonded so that the length of a face formed by the end face of the porous ceramic members becomes longer than the length of the side face, the direction in parallel with the side face of the porous ceramic members is referred to as the length direction of the ceramic laminated body.

With respect to the method for cutting the ceramic laminated body perpendicularly to the length direction thereof, not particularly limited, for example, a method in which a portion in the vicinity of the end faces of the ceramic laminated body where all the porous ceramic members are superposed on one another is cut perpendicularly to the length direction of the ceramic laminated body by using a diamond cutter or the like may be used.

By using these processes, the end face of the manufactured ceramic block can be flattened, and, in particular, by using the above-mentioned method, the flatness of the end face of the ceramic block can be set to 2 mm or less.

Here, for the reason as described above, it is only necessary to carry out the flattening process on the end face on one of the sides of the ceramic block.

Next, a sealing material layer 24 is formed on the circumference of the ceramic block 25. Thus, a honeycomb structured body having a structure in which a plurality of porous ceramic members are combined with one another through sealing material layers is formed.

Here, with respect to the method for forming the sealing material layer, not particularly limited, for example, the same method as described in the manufacturing method for the first honeycomb structured body may be used.

Next, information regarding the end face of the honeycomb structured body is displayed on the circumferential surface and/or an end face of the honeycomb structured body thus manufactured by using the two-dimensional code. With respect to the method for displaying the information regarding the end faces, not particularly limited, the same method as described in the manufacturing method for the first honeycomb structured body may be used.

By carrying out the above-mentioned processes, it is possible to manufacture the honeycomb structured body of the second embodiment.

Here, an exhaust gas converting catalyst may be supported on the honeycomb structured body according to the present invention that has been manufactured through the first or second manufacturing method. In other words, in the case where the honeycomb structured body according to the present invention is used as a catalyst supportingmember, an exhaust gas converting catalyst is supported thereon so that the honeycomb structured body according to the present invention is allowed to convert toxic components in exhaust gases, such as HC, CO, NOx and the like, and gases derived from organic components slightly contained in the honeycomb structured body according to the present invention.

Moreover, in the honeycomb structured body according to the present invention, information regarding the end faces is placed on the circumferential surface and/or an end face thereof by using the two-dimensional code; therefore, upon installing an exhaust gas converting catalyst on only the gas flow-out cells or upon installing the catalyst inside the through holes with a density gradient, it becomes possible to prevent missetting in the amount of application of the catalyst.

Furthermore, in the case where an exhaust gas converting catalyst is placed inside each through hole with one end of the through hole being sealed, the honeycomb structured body according to the present invention is allowed to function as a particle-collecting filter for collecting particulates in exhaust gases, and also to convert toxic components in exhaust gases, such as HC, CO, NOx and the like, and gases derived from organic components slightly contained in the honeycomb structured body according to the present invention.

### EXAMPLES

The following description will discuss the present invention in detail by means of examples; however, the present invention is not intended to be limited by these examples.

### (Example 1)

(1) Powder of α-type silicon carbide having an average particle size of 10 µm (60%byweight) andpowderof β-type silicon carbide having an average particle size of 0.5 µm (40% by weight) were wet-mixed, and to 100 parts by weight of the resultingmixture were added and kneaded 5 parts by weight of an organic binder (methyl cellulose) and 10 parts by weight of water to prepare a kneaded matter. After a slight amount of a plasticizer and a lubricant had been added to the kneaded matter and this had been further kneaded, the resulting kneaded matter was extrusion-molded so that a raw formed body was manufactured.

Next, the above-mentioned raw formed body was dried by using a microwave drier, and predetermined through holes were then filled with a paste having the same composition as the raw formed body, and after having been again dried by using a drier, this was degreased at 400°C, and sintered at 2200°C in a normal-pressure argon atmosphere for 3 hours to manufacture a porous ceramic member as shown in Fig. 3, which was made of a silicon carbide sintered body, and had a size of 34 mm x 34 mm x 300 mm, the number of through holes of 31 pcs/cm² and a thickness of the partition wall of 0.3 mm.

(2) A heat resistant sealing material paste, which contained 31% by weight of alumina fibers having a fiber length of 0.2 mm, 22% by weight of silicon carbide particles having an average particle size of 0.6 µm, 16% by weight of silica sol, 1% by weight of carboxymethyl cellulose and 30% by weight of water, was used so that, by carrying out the processes as explained by reference to Fig. 4, a number of the porous ceramic members were combined with one another to form a ceramic laminated body.

(3) Moreover, one end of the resulting ceramic laminated body was cut perpendicularly to the length direction of the ceramic laminated body by using a diamond cutter so that the flatness of the cut end face was set to 0.5 mm. Here, with respect to the flatness of the end face, heights in the end face direction along the circumference of the round shape were measured at eight portions, and the average value of the measured values was calculated; thus, the flatness was determined by finding a difference between the average value of the measured values and the maximum value of the measured values. Here, the flatness on the end face on the side that had not been subjected to the flattening treatment was 2.5 mm.

(4) Successively, the ceramic laminated body was cut in parallel with its length direction by using a diamond cutter so that a cylinder-shaped ceramic block shown in Fig. 2 was manufactured.

(5) Next, a protective film (No. 315, made by Nitto Denko Corporation) made of a PET film coated with a thermosetting rubber-based sticker as an adhesive was stuck to each of the two ends of the ceramic block. Here, the protective film has the same shape as the end face of the ceramic block so that it can be stuck to the entire end face of the ceramic block through a sticking process at one time.

(6) Next, a sealing material paste layer was formed on the peripheral portion of the ceramic block by using the above-mentioned sealing material paste. Further, this sealing material paste layer was dried at 120°C so that a cylinder-shaped honeycomb structured body having a diameter of 143.8mm, which has 1.0 mm thickness of sealing material layers formed between the porous ceramic members as well as on the peripheral portion of the ceramic block, was manufactured as a honeycomb filter 20 shown in Fig. 2.

(7) Next, on the peripheral surface of the resulting the honeycomb structured body, information of the exhaust gas inlet side and exhaust gas outlet side, also including that the outlet side had been subj ected to a flattening treatment were displayed by a 5 x 5 mm QR code (registered trademark), by using a laser marker.

Here, ten of these honeycomb structured bodies were prepared.

### (Example 2)

The same processes as Example 1 were carried out except that in the process (2) of Example 1 upon forming the ceramic laminated body, porous ceramic members were stacked with one end of each ceramic member being aligned and that process (3) of Example 1 was not carried out so that a honeycomb structured body was manufactured.

Here, the end face on the side at which the porous ceramic members had been stacked with aligned end face had a flatness of 1.0 mm, while the end face on the other side had a flatness of 2.5 mm. Moreover, in the present example, information including the end face of the side at which the porous ceramic members were stacked with aligned end face was displayed by the 5 x 5 mm QR code (registered trademark).

Here, ten of these honeycomb structured bodies were prepared.

### (Comparative Example 1)

The same processes as those of Example 1 were carried out except that information relating the end faces was not displayed on the circumferential surface of the honeycomb structured body so that a honeycomb structured body was manufactured.

Here, ten of these honeycomb structured bodies were prepared.

With respect to each of the honeycomb structured bodies manufactured in Example 1, 2 and Comparative Example 1, the circumferential portion was coated with a mat made of inorganic fibers, and the honeycomb structured body was then inserted into a pipe constituting an exhaust passage of an internal combustion engine. Here, the honeycomb structured body manufactured in each of the examples was inserted from the side that had been subjected to the flattening treatment.

Thereafter, the internal combustion engine was continuously driven for 1000 hours.

As a result, all the ten honeycomb structured bodies manufactured in Example 1 and Example 2 could be used without any problems.

Then, the QR code after this stage was read with a camera, and connected to Internet website of the manufacturing company using a telecommunication line such as Internet. As a result, information of the date of manufacture, manufacturer, etc. were able to be confirmed instantly. Of course, these information were displayed with the QR code in advance.

In contrast, in the case of the honeycomb structured bodies manufactured in Comparative Example 1, four of the honeycomb structured bodies out of ten had deviations on the mat portion after the continuous driving operation of 1000 hours to cause rattling. When the honeycomb structured bodies having these problems were examined, it was found that all the honeycomb structured bodies had been inserted from the end face on the side having inferior flatness, and that due to the inferior flatness, those bodies had been secured diagonally.

In other words, all the honeycomb structured bodies having problems were caused by misplacement in the direction upon insertion into the pipe.

### (Reference Examples 1 to 4)

By the same procedure as Example 1, a hundred of honeycomb structured bodies were prepared for each Example which have the curvature radius Rof 15mm (Reference Example 1), 20mm (Reference Example 2), 50 mm (Reference Example 3), and 1400 mm (Reference Example 4). On the side faces of these honeycomb structured bodies, a data matrix of 15 x 15 mm was displayed on the level (in the direction that two edges of the data matrix become parallel with the length direction of the honeycomb structured body).

This data matrix was read out using TL30 GT10B-SM manufactured by DENSO Corporation.

As a result, in Reference Example 1, reading error occurred, but in Reference Examples 2 to 4, all of the data were able to be read.

The r/R values in each Reference Example were as follows: 1.00 in Reference Example 1, 0.75 in Reference Example 2, 0.30 in Reference Example 3, and 0.01 in Reference Example 4.

### (Reference Examples 5 to 7)

Information was displayed in the same manner as Reference Examples 2 to 4 except that a data matrix of 10.6 x 10. 6 mm was printed on the honeycomb structured body and then its printed position was rotated 45 degrees (r becomes 15 mm).

This data matrix was read out using TL30 GT10B-SM manufactured by DENSO Corporation, and then the whole data was able to be read.

The r/R values in each Reference Example were as follows: 0.75 in Reference Example 5, 0.30 in Reference Example 6, and 0.01 in Reference Example 7.

### (Reference Examples 8 to 10)

Information was displayed on the honeycomb structured body in the same manner as Reference Examples 2 to 4 except that the printed position of the data matrix of 15 x 15 mm was rotated 45 degrees, and this information was read out in the same manner as Reference Example 1. Then, in Reference Example 8 (r/R = 1.06), reading error occurred in some cases.

In Reference Examples 9 and 10, information was able to be read. The r/R values in each Reference Example were as follows: 1.06 in Reference Example 8, 0.42 in Reference Example 9, and 0.02 in Reference Example 10.

### BRIEF DESCRIPTION OF THE DRAWINGS

Fig. 1(a) is a perspective view that schematically shows one example of a honeycomb structured body in accordance with a first embodiment, and Fig. 1(b) is a cross-sectional view taken along line A-A of Fig. 1(a).
Fig. 2 is a perspective view that schematically shows one example of a honeycomb structured body in accordance with a second embodiment.
Fig. 3 (a) is a perspective view that schematically shows a porous ceramic member to be used for the honeycomb structured body of the second embodiment shown in Fig. 2, and Fig. 3(b) is a cross-sectional view taken along line B-B of Fig. 3(a).
Fig. 4 is a side view that schematically shows a process in which the honeycomb structured body of the second embodiment is manufactured.
Fig. 5 is a perspective view that schematically shows one example of a conventional honeycomb structured body.
Fig. 6(a) is a partially enlarged cross-sectional view that schematically shows one example of a cross section of the honeycomb structured body according to the present invention in which through holes having sealed end portions on one of face sides and through holes having sealed end portions on the other face side have respectively different opening diameters; Fig. 6(b) is a partially enlarged cross-sectional view that schematically shows another example of a cross section of the honeycomb structured body according to the present invention in which through holes having sealed end portions on one of face sides and through holes having sealed end portions on the other face side have respectively different opening diameters; and
Fig. 6(c) is partially enlarged cross-sectional view that schematically shows still another example of a cross section of the honeycomb structured body according to the present invention in which through holes having sealed end portions on one of face sides and through holes having sealed end portions on the other face side have respectively different opening diameters.
Fig. 7 is a perspective view that schematically shows another example of the honeycomb structured body of the first embodiment.

### EXPLANATION OF SYMBOLS

- 10, 10': honeycomb structured body
- 11: through hole
- 12: plug
- 13: wall portion
- 14: sealing material layer
- 15: pillar-shaped body
- 16, 26: two-dimensional code
- 17: label
- 20: honeycomb structured body
- 23, 24: sealing material layer
- 25: ceramic block
- 30: porous ceramic member (honeycomb member)
- 31: through hole
- 32: plug
- 33: partition wall
- 41: paste layer

## Claims

1. A pillar-shaped honeycomb structured body in which a large number of through holes are placed in parallel with one another in the length direction with a wall portion interposed therebetween,
wherein
information of said honeycomb structured body is displayed on a circumferential surface and/or a end face of the honeycomb structured body by using a two-dimensional code.

2. The honeycomb structured body according to claim 1,
wherein
said information is any one of information regarding the end faces, information regarding the manufacturing history and dimension precision, and information regarding the weight.

3. The honeycomb structured body according to claim 1 or 2,
wherein
said honeycomb structured body is configured by combining a plurality of pillar-shaped porous ceramic members with one another through a sealing material layer, each pillar-shaped porous ceramic member having a large number of through holes that are placed in parallel with one another in the length direction with a wall portion interposed therebetween.

4. The honeycomb structured body according to claim 3,
wherein
each of said through holes has one end which is sealed and the other end which is opened, and
all of or a part of said partition wall that separates said through holes with one another is configured to function as a filter for collecting particles.

5. The honeycomb structured body according to claim 4,
wherein
a through hole having sealed ends on one face side and a through hole having sealed ends on the other face side are different from each other in opening diameter, or different from each other in aperture ratio at each end face.

6. The honeycomb structured body according to any one of claims 1 to 5,
wherein
said information regarding the end face, displayed on the circumferential surface of said honeycomb structured body, is displayed on a portion closer to either of the corresponding end face.

7. The honeycomb structured body according to any one of claims 1 to 6,
wherein
a catalyst for converting exhaust gases is applied to said porous ceramics.

8. The honeycomb structured body according to any one of claims 1 to 7,
which satisfies the relation 0.01≦ (r/R) ≦0.75 when the curvature radius of the circumference of said honeycomb structured body is represented by R, and the length in the circumferential direction of the honeycomb structured body of said two-dimensional code is represented by r.

## Amended claims

### Amended claims in accordance with Rule 86(2) EPC.

**1.** A pillar-shaped honeycomb structured body (10) in which a large number of through holes (11) are placed in parallel with one another in the length direction with a wall portion (13) interposed therebetween,
wherein
information regarding the end faces of said honeycomb structured body is displayed on a circumferential surface and/or an end face of the honeycomb structured body by using a two-dimensional code (16).

**2.** The honeycomb structured body according to claim 1,
wherein
said honeycomb structured body is configured by combining a plurality of pillar-shaped porous ceramic members (30) with one another through a sealing material layer (23), each pillar-shaped porous ceramic member (30) having a large number of through holes that are placed in parallel with one another in the length direction with a wall portion interposed therebetween.

**3.** The honeycomb structured body according to claim 2,
wherein
each of said through holes has one end which is sealed and the other end which is opened, and
all of or a part of said partition wall that separates said through holes with one another is configured to function as a filter for collecting particles.

**4.** The honeycomb structured body according to claim 3,
wherein
a through hole having a sealed end on one face side and a through hole having a sealed end on the other face side are different from each other in opening diameter, or different from each other in aperture ratio at each end face.

**5.** The honeycomb structured body according to any one of claims 1 to 4,
wherein
said information regarding the end face, displayed on the circumferential surface of said honeycomb structured body, is displayed on a portion closer to either of the corresponding end faces.

**6.** The honeycomb structured body according to any one of claims 1 to 5,
wherein
a catalyst for converting exhaust gases is applied to said honeycomb structured body, and
information regarding the end face supporting more catalyst than the other end face is displayed.

**7.** The honeycomb structured body according to any one of claims 1 to 6,
which satisfies the relation 0.01≦ (r/R)≦ 0.75 when the curvature radius of the circumference of said honeycomb structured body is represented by R, and the length in the circumferential direction of the honeycomb structured body of said two-dimensional code is represented by r.

**8.** The honeycomb structured body according to claim 2,
wherein
information regarding flatness of the end faces is displayed.

**9.** The honeycomb structured body according to claim 8,
wherein
the information indicates that either end face has been subjected to a flattening treatment.

**10.** The honeycomb structured body according to claim 2,
wherein
the porous ceramic members are stacked so as to align only the end face on one of the sides, and
the information indicates the aligned end face.

**11.** A pillar-shaped honeycomb structured body (10) in which a large number of through holes (11) are placed in parallel with one another in the length direction with a wall portion (13) interposed therebetween,
wherein
information regarding URL of Internet is displayed on a circumferential surface and/or and end face of the honeycomb structured body by using a two-dimensional code (16).
